# DEMANDE DE BREVET EUROPEEN

(11) **EP 0 722 058 A1**
(43) Date de publication de la demande: **17.07.1996**
(21) Numéro de dépôt: 96400066.5
(22) Date de dépôt: 11.01.1996
(51) Int. Cl.: F16H 59/10, F16H 61/22

(54) **Sélecteur incorporant un mécanisme de verrouillage à électro-aimant**

(30) Priorité: 11.01.1995 FR 9500255
(71) Demandeur: BOWDEN FRANCE S.A., F-60730 Cauvigny (FR)
(72) Inventeur: Jossart, Bruno, F-60140 Liancourt (FR); Bar, Jean-Philippe, F-60000 Beauvais (FR); Lerouge, Dominique, F-75012 Paris (FR)
(74) Mandataire: Schrimpf, Robert

(57) **Abrégé**

L'invention concerne un sélecteur (1) pour boîte de vitesses d'un véhicule, comprenant un levier de sélection à déplacer manuellement et un mécanisme de verrouillage à électro-aimant (25) apte à retenir le levier de sélection dans une position donnée tant qu'une condition prédéterminée n'est pas remplie, telle qu'une pression exercée sur la pédale de frein du véhicule. L'électro-aimant (25) est apte à solliciter en déplacement un coulisseau (21) lorsqu'activé électriquement pour agir sur le mécanisme de verrouillage et libérer le levier de sélection. Le sélecteur comporte un organe de butée (41) mobile, relié à une commande à câble, apte à venir sur le trajet du coulisseau (21) pour s'opposer à un mouvement de ce dernier.

## Description

La présente invention concerne un sélecteur pour boîte de vitesses d'un véhicule, et plus particulièrement un sélecteur du type comprenant un levier de sélection et un mécanisme de verrouillage à électro-aimant, apte à retenir le levier de sélection dans une position donnée tant qu'une condition prédéterminée n'est pas remplie.

On a proposé dans le brevet EP-0 315 173 un sélecteur pour boîte de vitesses automatique, comprenant un levier de sélection à déplacer manuellement et une grille de sélection définissant une position du levier correspondant à l'arrêt du véhicule et au moins une position du levier correspondant à la marche du véhicule. Le sélecteur est équipé d'un mécanisme de verrouillage à électro-aimant, propre à retenir le levier de sélection dans la position correspondant à l'arrêt du véhicule tant que le conducteur n'appuie pas sur la pédale de frein. On empêche ainsi un avancement accidentel du véhicule à la mise en route. L'électro-aimant agit sur le mécanisme de verrouillage pour libérer le levier de sélection lorsque le conducteur enfonce la pédale de frein. Un mécanisme de libération à poussoir est en outre prévu pour agir manuellement sur le mécanisme de verrouillage quand l'énergie électrique nécessaire à l'activation de l'électro-aimant n'est pas disponible, par exemple si les batteries du véhicule sont déchargées. Le mécanisme de verrouillage comporte un verrou relié par une commande à câble au contacteur rotatif à clef commandant le démarrage et l'arrêt du véhicule. Lorsque la clef est dans une position d'introduction ou de retrait dans le contacteur, le verrou bloque le mécanisme de verrouillage dans une position de retenue du levier de sélection. Lorsque la clef est tournée dans le contacteur pour mettre les circuits électriques du véhicule sous tension, le verrou s'est déplacé et permet au poussoir ou à l'électro-aimant d'agir sur le mécanisme de verrouillage pour libérer le levier de sélection. Ce sélecteur connu est de construction complexe.

La présente invention a pour objet de proposer un nouveau sélecteur particulièrement fiable et robuste, du type comprenant un levier de sélection à déplacer manuellement, un mécanisme de verrouillage à électro-aimant adapté à retenir le levier de sélection dans une position donnée tant qu'une condition prédéterminée n'est pas remplie, telle qu'une pression exercée sur la pédale de frein du véhicule, l'électro-aimant étant apte à solliciter un coulisseau en déplacement, depuis une première position dans laquelle il bloque le mécanisme de verrouillage dans une position de retenue du levier de sélection, vers une deuxième position dans laquelle il libère le mécanisme de verrouillage pour autoriser un déplacement du levier de sélection. De façon caractéristique, le sélecteur comporte un organe de butée, mobile, relié à une commande à câble, cet organe de butée étant apte à venir sur le trajet du coulisseau pour s'opposer à un mouvement de ce dernier entre lesdites première et deuxième positions.

Avantageusement, le coulisseau est adapté, dans ladite première position, à venir en prise avec le mécanisme de verrouillage par une extrémité axiale et, dans ladite deuxième position, à faire saillie par une extrémité axiale opposée sur le trajet de l'organe de butée pour s'opposer à un mouvement de ce dernier.

Dans une réalisation de l'invention, la commande à câble est reliée à un contacteur rotatif à clef, commandant la mise sous tension et hors tension des circuits électriques du véhicule, l'organe de butée est mobile entre une position active, déterminée par la position de la clef dans le contacteur lors de son introduction ou de son retrait, et une position inactive déterminée par la position de la clef après rotation dans le contacteur et correspondant à la mise sous tension des circuits électriques du véhicule, l'organe de butée interdisant, dans ladite position active, le déplacement du coulisseau vers ladite deuxième position et autorisant, dans ladite position inactive, le déplacement du coulisseau vers ladite deuxième position.

Avantageusement, le coulisseau est rappelé vers ladite première position par des moyens de rappel élastiques.

Avantageusement, le mécanisme de verrouillage comprend un verrou pivotant conformé pour être entraîné en rotation depuis une position de repos dans une position de verrouillage du levier de sélection, par le passage de ce dernier dans sa position correspondant à l'arrêt du véhicule.

Avantageusement, le sélecteur comporte un poussoir à actionner manuellement pour solliciter en déplacement le coulisseau en l'absence de l'énergie électrique nécessaire à l'activation de l'électro-aimant.

D'autres caractéristiques et avantages de la présente invention apparaîtront à la lecture de la description détaillée qui va suivre, d'un exemple de réalisation non limitatif de l'invention, et à l'examen du dessin annexé sur lequel :
- la figure 1 est une vue en perspective, partielle, de dessous, d'un sélecteur conforme à un exemple de réalisation de l'invention,
- la figure 2 est une vue de dessus, partielle, de la grille de sélection équipant le sélecteur représenté sur la figure 1,
- les figures 3A et 3B sont des vues en perspective, partielles, montrant respectivement le verrou pivotant dans des positions de verrouillage du levier de sélection et de repos,
- les figures 4A et 4B sont des vues de côté du sélecteur respectivement représenté sur les figures 3A et 3B,
- les figures 5A et 5B sont des vues de dessus, partielles, du sélecteur respectivement représenté sur les figures 3A et 3B, dans la direction de la flèche V sur ces figures,
- la figure 6 est une vue en perspective, partielle, du sélecteur représenté sur les figures précédentes, et
- la figure 7 est une vue analogue à la figure 6, le verrou pivotant étant représenté dans sa position de verrouillage du levier de sélection.

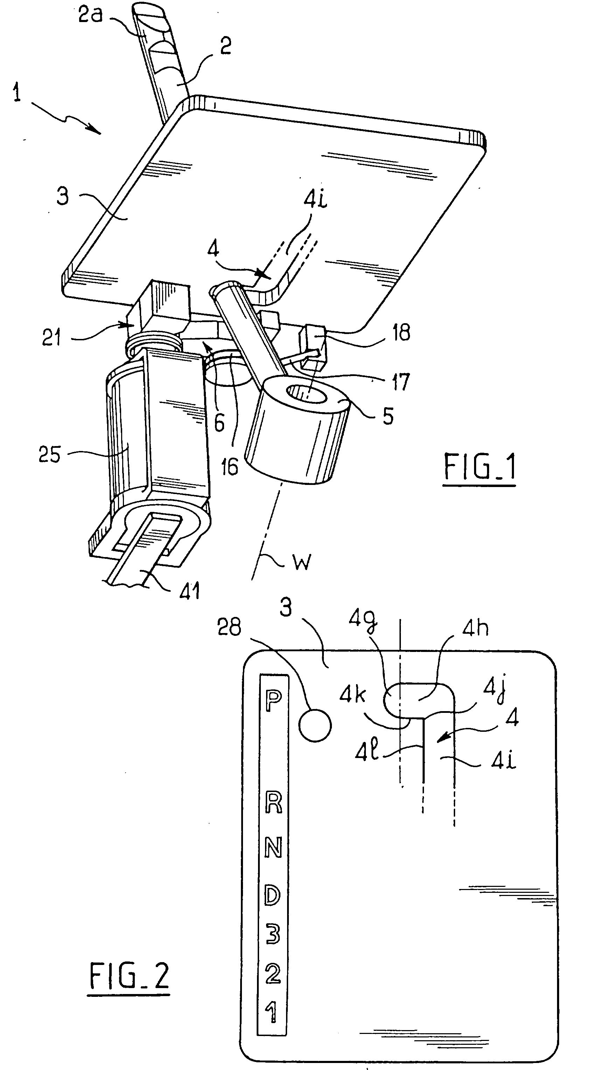

Le sélecteur 1 représenté sur les figures est destiné à commander une boîte de vitesses automatique d'un véhicule automobile. Il comporte un levier de sélection 2, déplaçable manuellement par le conducteur du véhicule, relié de façon connue en soi (par exemple par une tringlerie, par une commande à câble ou par toute autre liaison appropriée) à la boîte de vitesses pour commander le régime souhaité de fonctionnement de cette dernière. Le levier de sélection 2 est guidé dans son déplacement par une grille de sélection 3 partiellement représentée sur les figures 1 et 2, présentant une région centrale généralement plane, traversée par le levier de sélection 2 et ajourée de manière à former un chemin de guidage 4. Ce dernier définit des emplacements sur la grille correspondant à l'engagement de régimes particuliers de fonctionnement de la boîte de vitesses, par exemple l'engagement de la première vitesse de la boîte (le levier de sélection se trouve alors en face du repère "1"), de la deuxième vitesse (repère "2"), de la troisième vitesse (repère "3"), d'une position de marche normale du véhicule (repère "D"), d'une position de point mort (repère "N"), de marche arrière (repère "R") et d'une position de stationnement du véhicule (repère "P"). Le chemin de guidage 4 présente dans l'exemple décrit une extrémité coudée à angle droit, constituée par la réunion de deux portions rectilignes, dont une portion référencée 4i et une portion d'extrémité référencée 4h. La grille de sélection définit un emplacement 4g correspondant à l'extrémité libre de la portion 4h et à la position de stationnement du véhicule. La largeur du chemin de guidage 4 est sensiblement égale au diamètre de la section transversale du levier de sélection 2 (mesurée à hauteur de la traversée de la grille de sélection 3 par le levier 2). On peut bien entendu, sans sortir du cadre de la présente invention, modifier la géométrie du chemin de guidage 4 et adopter un trajet entièrement rectiligne par exemple.

Le levier de sélection 2 reçoit à son extrémité supérieure 2a un pommeau connu en lui-même et non représenté, et il est articulé à l'extrémité inférieure, par tout moyen connu de l'homme du métier, sur un support fixe non représenté, avec dans l'exemple décrit une possibilité de débattement angulaire autour de deux axes non parallèles. De préférence, il s'agit d'une articulation à deux axes sécants perpendiculaires entre eux, un manchon transversal 5 étant fixé à l'extrémité inférieure du levier de sélection 2 pour son montage à pivotement autour d'un tourillon s'étendant selon l'un des axes d'articulation précités, référencé W. On peut, en variante, relier le levier de sélection 2 au support fixe précité par une liaison à rotule. Un mécanisme connu en lui-même et non représenté transforme la position angulaire du levier de sélection autour desdits axes d'articulation en une information (par exemple un déplacement précis d'une ou plusieurs tringles de liaison ou d'une ou plusieurs commandes à câble) permettant de commander un régime particulier de fonctionnement de la boîte de vitesses.

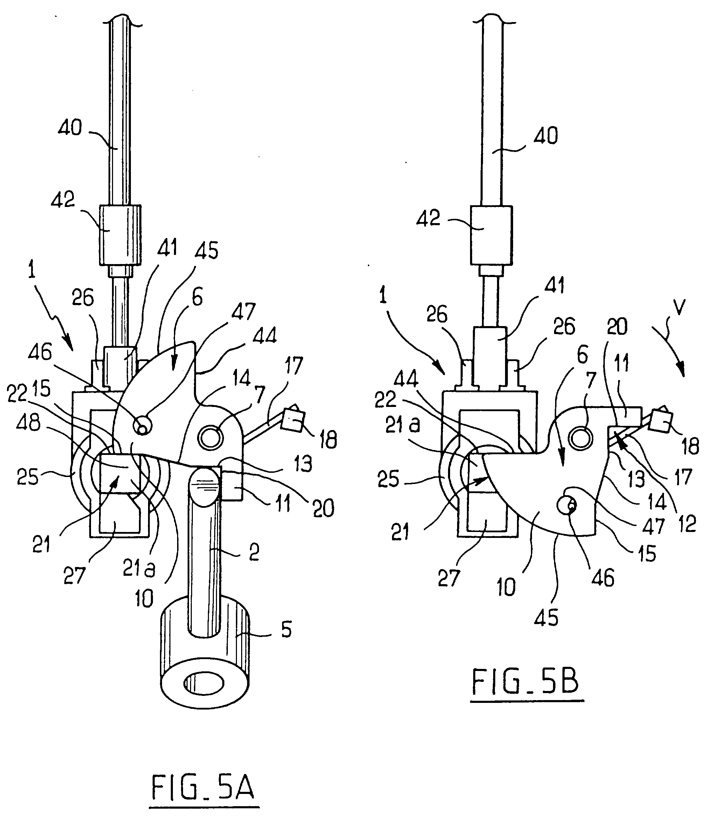

Un verrou 6 est monté à pivotement, relativement à la grille de sélection 3, autour d'un axe de rotation R sensiblement perpendiculaire au plan de la région centrale ajourée de la grille de sélection 3. Le verrou 6 comporte, comme représenté plus particulièrement sur les figures 5A et 5B, deux branches 10 et 11 se rejoignant autour d'un alésage 7 d'axe R. Un rivet 8 traverse l'alésage 7 et sert de pivot au verrou 6. Ce rivet 8 présente un corps cylindrique de révolution autour de l'axe R, de diamètre adapté à celui de l'alésage 7, prolongé à une extrémité axiale par une tête épaulée 9 propre à retenir axialement le verrou 6 sur le corps cylindrique du rivet 8, et solidarisé à son extrémité axiale opposée avec la grille de sélection 3, en un emplacement situé à proximité de la portion 4h du chemin de guidage 4.

Le verrou 6 est délimité axialement, selon l'axe R, par deux faces frontales planes et parallèles, perpendiculaires à l'axe R, et radialement, sur sa périphérie, par une surface latérale de génératrice parallèle à l'axe R. Cette surface latérale forme, à la jonction des branches 10 et 11, un dièdre 12 d'angle au sommet égal à 90°, provenant de la réunion d'un plan 13 et d'un plan 20. Le plan 13, situé sur la branche 10, se prolonge, en direction de l'extrémité libre de cette dernière, par un plan oblique 14, formant un angle d'une quinzaine de degrés avec le plan 13, et s'étendant sur toute la largeur de la portion 4h du chemin de guidage lorsque le verrou 6 est dans sa position de repos. Le plan oblique 14 est prolongé par un plan 15 parallèle au plan 13, s'étendant jusqu'à l'extrémité libre de la branche 10. L'arête formée par l'intersection des plans 14 et 15 coïncide, lorsque le verrou 6 est dans sa position de repos, avec le sommet d'un angle saillant 4j formé à la jonction de bords 4k et 4l de la grille de sélection 3 (bordant respectivement les portions rectilignes 4h et 4i, comme montré plus particulièrement sur la figure 2). La branche 10 est délimitée d'un côté par la réunion des plans 13, 14 et 15, et du côté opposé par un plan 44 perpendiculaire aux plans 13 et 15. Les plans 15 et 44 sont reliés par une surface 45 cylindrique de révolution autour de l'axe R.

Le déplacement du levier de sélection 2 dans la portion 4i du chemin de guidage 4, en direction du coude réunissant les portions 4h et 4i, provoque, par appui du levier de sélection 2 sur le bord de la branche 10 défini par le plan oblique 14, une rotation du verrou 6 depuis sa position de repos dans le sens de la flèche V de la figure 5B. Après passage du coude réunissant les portions 4h et 4i, le déplacement du levier de sélection 2 dans la portion 4h du chemin de guidage 4, en direction de l'emplacement 4g, provoque une continuation du pivotement du verrou 6 dans le sens de la flèche V, par appui du levier de sélection 2 sur le bord de la branche 10 défini par le plan 13, jusqu'à ce que le verrou 6 atteigne sa position de verrouillage du levier de sélection 2 représentée sur la figure 5A. En position de verrouillage du levier de sélection 2, le bord de la branche 11 défini par le plan 20 bloque le levier de sélection 2 dans l'emplacement 4g du chemin de guidage 4, comme représenté sur la figure 5A.

Un ressort de rappel 16 est enroulé sur la tête épaulée 9 du rivet 8, prend appui par une première branche 17 contre une butée 18 solidaire de la grille de sélection 3, formant saillie vers le bas, et s'engage par une deuxième branche 19 présentant une extrémité recourbée 46, dans un perçage 47 ménagé sur la branche 10, de manière à exercer sur le verrou 6 un couple tendant à le rappeler en rotation dans le sens contraire à la flèche V, vers sa position de repos.

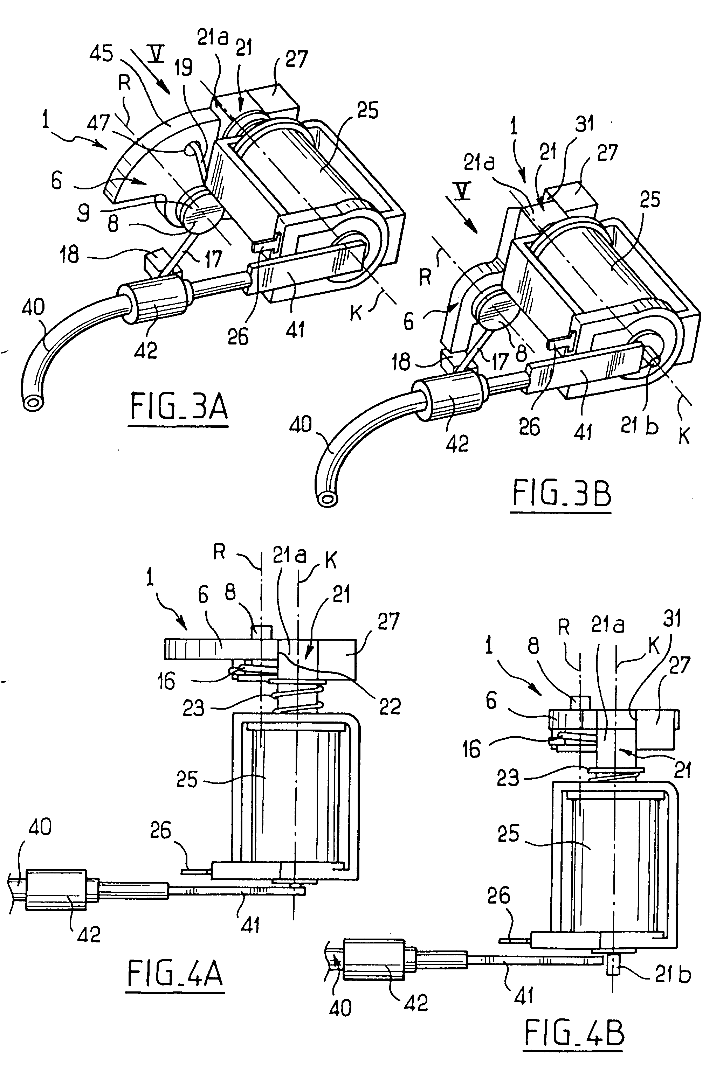

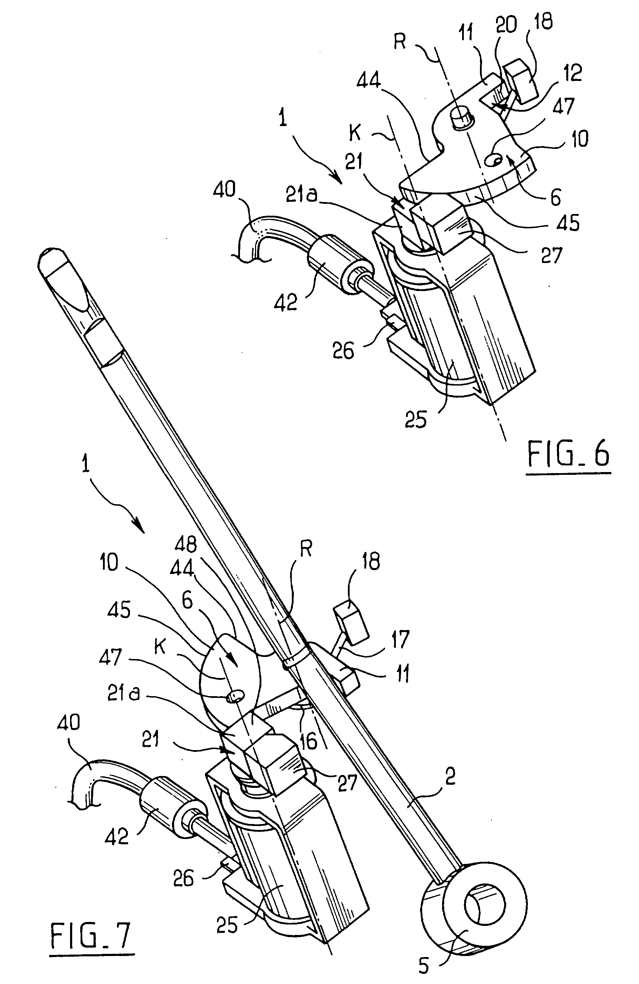

Le sélecteur 1 comporte un coulisseau 21 propre à retenir le verrou 6 en position de verrouillage du levier de sélection 2 tant qu'une condition prédéterminée n'est pas remplie ; dans l'exemple de réalisation décrit, cette condition correspond au changement d'état d'un interrupteur électrique lorsque le conducteur enfonce la pédale de frein du véhicule. Le coulisseau 21 est guidé à coulissement dans une direction K parallèle à l'axe de rotation R du verrou 6, et présente à une extrémité axiale 21a une surface d'arrêt 22 s'étendant parallèlement à l'axe K, propre à venir au contact du bord de la branche 10 défini par le plan 15 lorsque le verrou 6 a atteint sa position de verrouillage représentée sur les figures 3A, 4A et 7, pour immobiliser ce dernier. Le coulisseau 21 est alors dans une position de blocage en rotation du verrou 6, et il est rappelé par des moyens de rappel élastiques dans cette position de blocage. Plus particulièrement, comme représenté sur les figures 4A et 4B, ces moyens de rappel élastiques sont constitués dans l'exemple de réalisation décrit par un ressort hélicoïdal 23 coaxial à l'axe K.

Le sélecteur 1 comporte un électro-aimant 25 pour solliciter en déplacement le coulisseau 21 à l'encontre du ressort 23 et libérer le verrou 6 lorsque la condition prédéterminée mentionnée plus haut est remplie, c'est-à-dire, dans l'exemple décrit, lorsque le conducteur appuie sur la pédale de frein. L'électro-aimant 25 présente un passage le traversant selon l'axe K et le coulisseau 21 comporte un corps longitudinal guidé à coulissement dans ce passage. Ce corps longitudinal s'élargit à l'extrémité axiale 21a pour former la tête élargie portant la surface d'arrêt 22. On notera que le ressort 23 est enroulé sur le corps longitudinal du coulisseau 21 et prend axialement appui, à une extrémité, sur un épaulement de la tête élargie du coulisseau 21 et, à l'autre extrémité, sur la face de l'électro-aimant 25 bordant l'ouverture du passage servant de guide au coulisseau 21. L'interrupteur électrique qui équipe la pédale de frein établit, lorsque le conducteur enfonce celle-ci, un passage de courant vers les bornes 26 de l'électro-aimant 25, ce qui provoque sous l'action du champ magnétique créé, un déplacement du coulisseau 21 vers le bas sur la figure 4A qui libère le verrou 6. Le levier de sélection 2 qui n'est plus bloqué dans l'emplacement 4g du chemin de guidage 4 par le verrou 6 peut alors être déplacé par le conducteur pour l'enclenchement d'un régime de fonctionnement de la boîte de vitesses correspondant à la marche du véhicule.

Le sélecteur 1 comporte avantageusement un mécanisme de libération à actionner manuellement pour solliciter en déplacement le coulisseau 21 en cas d'absence de l'énergie électrique nécessaire à l'activation de l'électro-aimant 25, par exemple si la batterie du véhicule est déchargée. Ce mécanisme de libération comporte un poussoir non représenté, présentant une extrémité axiale extérieure formant normalement saillie, sur la grille de sélection 3, à la faveur d'un perçage 28 d'axe parallèle aux axes R et K. Ce poussoir est guidé à coulissement par le perçage 28 et prend appui, lorsqu'il est enfoncé, par son extrémité axiale inférieure, sur la surface frontale 48 de la tête élargie du coulisseau 21, perpendiculaire à l'axe K, pour solliciter le coulisseau en déplacement vers le bas et libérer le verrou 6.

La tête élargie du coulisseau 21 se déplace au contact d'une butée 27 fixe, solidaire dans l'exemple décrit de la grille de sélection 3 ; cette butée 27 présente une surface plane 31 s'étendant parallèlement à l'axe K au contact d'une surface de la tête élargie du coulisseau 21, située du côté opposé à la surface d'arrêt 22, de manière à reprendre les efforts de cisaillement exercés sur le coulisseau 21 par le verrou 6 en cas de tentative de manoeuvre forcée du levier de sélection 2 lorsque le verrou 6 est bloqué en pivotement par le coulisseau 21.

La longueur du corps longitudinal du coulisseau 21 est choisie de sorte que l'extrémité axiale 21b du coulisseau 21, située à l'opposé de l'extrémité axiale 21a, fasse saillie hors de l'électro-aimant 25 lorsque le coulisseau 21 est dans sa position dans laquelle il libère le verrou 6 (comme représenté sur la figure 4B), et s'escamote à l'intérieur de l'électro-aimant 25 lorsque le coulisseau 21 est dans sa position dans laquelle il bloque en rotation le verrou 6 (comme représenté sur la figure 4A).

Le sélecteur 1 est relié par une commande à câble à un contacteur rotatif à clef commandant la marche et l'arrêt du moteur, ce contacteur étant connu en lui-même et non représenté. Cette commande à câble comporte une gaine flexible 40 et une âme guidée à coulissement dans cette gaine. L'âme est reliée à une extrémité à un mécanisme à came, transformant une rotation de la clef de contact en un coulissement de l'âme dans la gaine, et à l'autre extrémité à une plaque 41 formant organe de butée mobile, comme cela va être précisé dans la suite. L'âme est guidée en coulissement à sa sortie de la gaine flexible 40 par un manchon de guidage 42, fixe. La plaque 41 est guidée en coulissement, selon un axe perpendiculaire à l'axe K, entre deux positions extrêmes déterminées par la position en rotation de la clef de contact dans le contacteur. Plus précisément, ce dernier est agencé de sorte que, lorsque la clef de contact est en position d'introduction ou de retrait, la plaque 41 est dans une première position représentée sur les figures 3A, 4A et 5A, et lorsque la clef de contact est dans une position de marche du moteur ou de mise sous tension des circuits électriques du véhicule, la plaque 41 est dans une deuxième position représentée sur les figures 3B, 4B et 5B. Dans la première position, la plaque 41 s'étend en regard de l'extrémité 21b du coulisseau 21 escamotée à l'intérieur de l'électro-aimant 25 et s'oppose par conséquent à sa sortie. La plaque 41 est guidée en coulissement de manière à opposer la résistance suffisante pour empêcher la sortie de l'extrémité 21b du coulisseau 21 lorsque ce dernier est sollicité en déplacement par l'activation de l'électro-aimant 25 ou l'enfoncement du poussoir de libération. Lorsqu'elle est dans ladite deuxième position, la plaque 41 s'étend en retrait du trajet de sortie de l'extrémité 21b et ne s'oppose plus à un mouvement du coulisseau 21 libérant le verrou 6. Par contre, lorsque le coulisseau 21 est dans sa position de libération du verrou 6, comme représenté sur la figure 4B, l'extrémité 21b s'étend sur le trajet de la plaque 41 de la deuxième position vers la première et l'empêche par conséquent d'atteindre cette dernière par butée de la tranche de la plaque 41 contre l'extrémité 21b.

Le fonctionnement du sélecteur 1 est le suivant.

On suppose pour commencer que la clef de contact est dans sa position d'introduction dans le contacteur et que le levier de sélection 2 se trouve dans l'emplacement 4g de la grille de sélection 3, correspondant à l'arrêt du véhicule. Tant que la clef de contact n'est pas tournée, la plaque 41 est dans sa première position et empêche la sortie de l'extrémité axiale 21b du coulisseau 21 hors de l'électro-aimant 25, comme illustré sur les figures 3A, 4B et 5A. Il n'est donc pas possible, sans clef de contact, de débloquer le levier de sélection 2, même en appuyant sur le poussoir du mécanisme de libération.

La rotation de la clef dans le contacteur provoque un déplacement de la plaque 41 vers la gauche sur la figure 4A, vers sa deuxième position qui autorise un enfoncement du coulisseau 21 et une sortie de l'extrémité 21b. Il devient alors possible de déplacer le coulisseau 21 pour libérer le verrou 6, soit en appuyant sur la pédale de frein du véhicule pour activer électriquement l'électro-aimant 25, soit en appuyant sur le poussoir du mécanisme de libération. L'enfoncement du coulisseau 21 libère le verrou 6, qui est entraîné en pivotement vers sa position de repos représentée sur la figure 5B lorsque le levier de sélection 2 est déplacé pour quitter l'emplacement 4g sur la grille de sélection 3. Ce pivotement est facilité par l'action du ressort de rappel 16. Une fois le pivotement du verrou 6 commencé, la branche 10 maintient le coulisseau 21 enfoncé, donc l'extrémité axiale 21b en saillie hors de l'électro-aimant 25 sur le trajet de la plaque 41, qui ne peut reprendre sa première position représentée sur les figures 3A, 4A et 5A. Il n'est donc pas possible de tourner la clef pour couper le contact et la sortir du contacteur tant que le verrou 6 n'a pas regagné sa position de verrouillage du levier de sélection 2, qui permet la remontée du coulisseau 21, donc tant que le levier de sélection 2 n'est pas dans l'emplacement 4g.

## Revendications

1. Sélecteur (1) pour boîte de vitesses d'un véhicule, comprenant un levier de sélection (2) à déplacer manuellement, et un mécanisme de verrouillage (6) à électro-aimant (25), adapté à retenir le levier de sélection dans une position donnée tant qu'une condition prédéterminée n'est pas remplie, telle qu'une pression exercée sur la pédale de frein du véhicule, l'électro-aimant (25) étant apte à solliciter un coulisseau (21) en déplacement, depuis une première position (figure 4A), dans laquelle il bloque le mécanisme de verrouillage dans une position de retenue du levier de sélection vers une deuxième position (figure 4B), dans laquelle il libère le mécanisme de verrouillage pour autoriser un déplacement du levier de sélection, caractérisé en ce que le sélecteur comporte un organe de butée (41) mobile, relié à une commande à câble, cet organe de butée étant apte à venir sur le trajet du coulisseau (21) pour s'opposer à un mouvement de ce dernier entre lesdites première et deuxième positions.

2. Sélecteur selon la revendication 1, caractérisé en ce que dans ladite première position (figure 4A), le coulisseau (21) est adapté à venir en prise avec le mécanisme de verrouillage par une extrémité axiale (21a) et dans ladite deuxième position (figure 4B), à faire saillie par son autre extrémité axiale (21b) sur le trajet de l'organe de butée (41) pour s'opposer à un mouvement de ce dernier.

3. Sélecteur selon l'une des revendications 1 et 2, caractérisé en ce que ladite commande à câble est reliée à un contacteur rotatif à clef, commandant la mise sous tension et hors tension des circuits électriques du véhicule, ledit organe de butée (41) étant mobile entre une position active (figure 4A) déterminée par la position de la clef dans le contacteur lors de son introduction ou de son retrait et une position inactive (figure 4B) déterminée par la position de la clef après rotation dans le contacteur et correspondant à la mise sous tension des circuits électriques du véhicule, l'organe de butée (41) interdisant dans ladite position active (figure 4A) le déplacement du coulisseau (21) vers ladite deuxième position et autorisant, dans ladite position inactive, le déplacement du coulisseau vers ladite deuxième position.

4. Sélecteur selon l'une des revendications 1 à 3, caractérisé en ce que le coulisseau (21) est rappelé vers sa première position (figure 4A) par des moyens de rappel élastiques (23).

5. Sélecteur selon l'une des revendications 1 à 4, caractérisé en ce que le mécanisme de verrouillage comprend un verrou (6) pivotant, conformé pour être entraîné en rotation dans une position de verrouillage du levier de sélection par le passage de ce dernier dans une position correspondant à l'arrêt du véhicule.

6. Sélecteur selon l'une des revendications 1 à 5, caractérisé en ce qu'il comporte un poussoir à actionner manuellement pour solliciter le coulisseau (21) en déplacement en l'absence de l'énergie électrique nécessaire pour activer l'électro-aimant (25).
